Europäisches Patentamt

European Patent Office

Office européen des brevets

(19)

(11) Publication number:

0 322 208
A2

## EUROPEAN PATENT APPLICATION

(12)

(21) Application number: 88312110.5

(22) Date of filing: 21.12.88

(51) Int. Cl.⁴: F 16 D 13/68

(30) Priority: 22.12.87 GB 8729872

(43) Date of publication of application:
28.06.89 Bulletin 89/26

(84) Designated Contracting States: DE ES FR GB IT

(71) Applicant: AUTOMOTIVE PRODUCTS PLC
Tachbrook Road
Leamington Spa Warwickshire CV31 3ER (GB)

(72) Inventor: Chouings, John Leslie
Malpas Bubbenhall
Coventry West Midlands CV8 3BD (GB)

Maycock, Ian Commander
149 Cubbington Road Lillington
Leamington Spa Warwickshire CV32 7AZ (GB)

(74) Representative: Cundy, Anthony Brian et al
Anthony Cundy & Company 384 Station Road Dorridge
Solihull West Midlands B93 8ES (GB)

(54) Friction clutch driven plate.

(57) A friction clutch driven plate, for example for an automobile, comprises a hub (11) and a friction facing carrier (14) mounted on the hub coaxially therewith and capable of limited angular movement about the hub. Intermediate drive means (24) is mounted coaxially on the hub for limited angular rotation relative to both the hub (11) and the friction facing carrier (14). Main torsion damping springs (27) act to resist rotation of the friction facing carrier relative to the intermediate drive means, and auxiliary torsion damping springs (32), softer than the main torsion damping springs act circumferentially to resist rotation of the intermediate drive means (24) relative to the hub (11). The auxiliary torsion damping springs are supported in pockets (36,136) formed in one radial face of the hub (11) or of the intermediate drive means (124).

FIGURE 1

EP 0 322 208 A2

Bundesdruckerei Berlin

## Description

### FRICTION CLUTCH DRIVEN PLATE

The present invention relates to friction clutch driven plates and, more particularly but not exclusively, relates to driven plates which are utilized in the friction clutches of automobiles.

A problem associated with some automobiles is that during periods when the transmission drive is under no load, rotary oscillations occur in the gearbox producing a phenomenon known as idle-rattle.

In order to damp out the vibrations which generate idle-rattle it is known to utilise a friction clutch driven plate that passes through two sets of damping springs arranged in series with each other. Very light loads applied to the driven plate are taken through soft auxiliary vibration damping springing. When the limited angular movement controlled by the auxiliary damping springing has been taken up, normal drive load passes through a set of main torsion damping springs. In this way, very soft springing is provided over a limited range of movement for very light loads and this arrangement tends to prevent idle-rattle. Such a driven plate is known from EP-A-0113202.

It is often important for a friction clutch driven plate to be compact in order to enable it to fit within a space available in an existing design of drive line or to assist in maintaining the combination of engine, clutch and gearbox as short as possible in a completely new design. It is also important to simplify the design of the driven plate as far as possible and any reduction in the number of components represents a significant economic saving.

It is an object of the present invention to provide a compact and economical design of clutch driven plate having main torsion damping springs and auxiliary torsion damping springing.

According to one aspect of the present invention there is provided a friction clutch driven plate comprising a hub, a friction facing carrier mounted on the hub coaxially therewith and capable of limited angular movement about the hub, intermediate drive means mounted coaxially on the hub for limited angular rotation relative to both the hub and the friction facing carrier, main torsion damping springs acting to resist rotation of the friction facing carrier relative to the intermediate drive means, and auxiliary torsion damping springs softer than the main torsion damping springs and acting circumferentially to resist rotation of the intermediate drive means relative to the hub, wherein the auxiliary torsion damping springs are supported in pockets formed in one radial face of the hub or the intermediate drive means.

The friction clutch driven plate may include a plate member connected to the intermediate drive means for rotation therewith and connected to the auxiliary springs. Preferably the plate member bears axially against a shoulder formed on the hub.

The friction clutch driven plate may include an axially directed annular spring acting between the plate member and the intermediate drive means.

An annular plate may extend around the hub between the intermediate drive means and the plate member and may receive the auxiliary springs in windows, the annular plate being non-rotatable relative to the hub.

The auxiliary springs may be supported in pockets formed in one radial face of the intermediate drive means. The hub may be provided with outwardly directed teeth which engage through a circumferential clearance with corresponding inwardly directed teeth of the intermediate drive means.

Alternatively, the hub may incorporate a flange, the recesses supporting the auxiliary springs being provided in the flange. The flange may be provided with outwardly directed teeth which engage through a circumferential clearance with corresponding inwardly directed teeth of the intermediate drive means.

Advantageously, the outwardly directed teeth of the flange extend only a part of the axial extent of the flange.

For a better understanding of the present invention and to show more clearly how it may be carried into effect reference will now be made, by way of example, to the accompanying drawings in which:

Figure 1 is a cross-sectional view of one embodiment of a friction clutch driven plate according to the present invention; and

Figure 2 is a cross-sectional view of part of a second embodiment of a friction clutch driven plate according to the present invention.

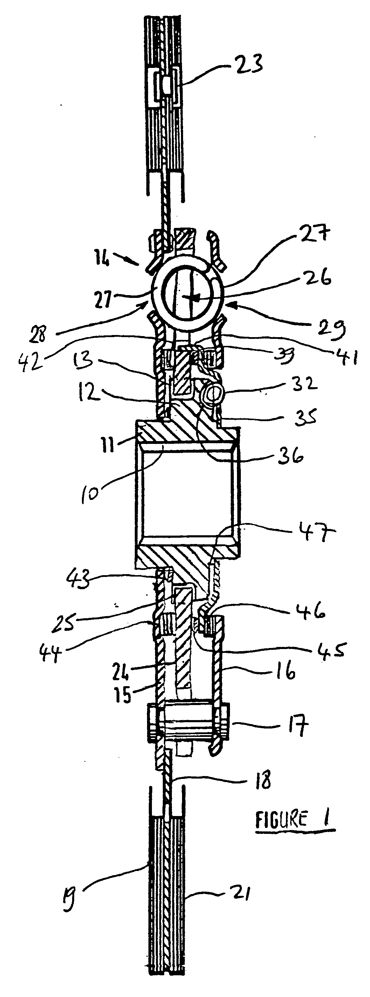

The driven plate shown in Figure 1 incorporates a hub 11 splined at l0 for mounting on and driving a gearbox input shaft (not shown). Hub 11 incorporates an external radial flange 12 which is provided with outwardly directed teeth l3 around its periphery. The teeth 13 extend along only a part of the axial extent of the flange 12.

The clutch driven plate also incorporates a friction facing carrier l4 which in turn includes two axially spaced annular side plates 15 and 16 which are connected together by three equally spaced stop pins 17. The stop pins are in effect large shouldered rivets. A friction facing carrier plate 18 is held against the side plate 15 by being rivetted thereto by the stop pins 17. The carrier plate 18 extends out beyond the side plates and carries around its outer periphery two annular friction facings 19 and 21. Carrier plate 18 is divided near its outer periphery into six segments to which the friction facings are secured by rivets 23. Side plate 15 extends inward towards the hub 11 and has a central aperture corresponding to the outer diameter of the hub 11 so that it acts as a guide for constraining the friction facing carrier with respect to the hub. Side plate 16 on the other hand is spaced radially from the hub 11.

A driving connection between the friction facing carrier 14 and the hub 11 includes an intermediate drive means constituted by a plate 24 which will hereinafter be referred to as the intermediate plate. The intermediate plate is generally annular and around its inner periphery incorporates inwardly directed teeth 25 which mesh, by way of a circumferential clearance, with the outwardly directed teeth 13 of the hub 11. The clearance provides a lost-motion connection between the hub and the intermediate plate which in this embodiment allows relative movement of 6°.

The intermediate plate is also provided with six circumferentially directed windows such as the window 26 which receive main torsion damping springs 27. Torsion dampings springs 27 are also received in windows 28 and 29 in the side plates 15 and 16 respectively. The six sets of windows are of varying length and incorporate springs of differing lengths and stiffnesses. Some of the windows have a circumferential clearance with respect to their associated springs so they do not come into effect until after some relative movement between the intermediate plate and the carrier 14. The main torsion damping springs such as 27 in their respective windows 26,28 and 29 constitute a driving connection between the friction facing carrier 14 and the intermediate plate 24 which operates in a manner to be described subsequently.

The driven plate also incorporates an auxiliary torsion damping spring connection between the intermediate plate 24 and the hub 11 to control the relative angular rotation between the hub and the intermediate plate which is permitted by the teeth 13 and 25. This connection is effected by three circumferentially directed auxiliary springs 32 which are arranged in a window in plate member 35 and extend into part-cylindrical pockets 36 formed in the side face of flange 12 of hub 11 and which are therefore only open to one side. Plate member 35 is freely rotatable on the hub 11 but has outward annular extensions 39 terminating in bent-over lugs 41 which engage in notches 42 at the inner edges of three of the windows 26 to provide a positive driving connection between plate member 35 and the intermediate plate 24. Thus the auxiliary springs 32 provide a driving connection between the intermediate plate 24 and the hub 11 through the intermediary of the plate member 35 and the flange 12. The significance of this driving connection and its relationship with the main driving connection through springs 27 will be described subsequently.

The relative location of the friction facing carrier, hub and intermediate plate includes several axially directed annular bearing members and associated axially directed annular springs. In particular, the side plate 15 is spaced from the flange 12 by a spring 43 and bears against the intermediate plate 24 by way of a bearing member 44. The plate member 35 is spaced from the intermediate plate 24 by a spring 45 and bears against the side plate 16 by way of a bearing member 46. The plate member 35 also bears against a shoulder 47 provided on the hub 11. This arrangement of springs and bearing members in combination with the shoulder 47 provides axial location of the plate member 35, side plate 16, intermediate plate 24 and side plate 15 without the need for a circlip.

The arrangement described allows limited angular movement between the hub and the intermediate plate and between the intermediate plate and the friction facing carrier under the control of torsion damping springs. The nature of this movement as torque is applied to the friction facings of the friction facing carrier from an engine for transmission through the hub to a gearbox will now be described. First of all, it should be explained that the main and auxiliary torsion damping springs hold the components of the driven plate in positions such that there is clearance for movement in both angular directions. When a light load or small displacement is applied to the carrier 14, this is transmitted through the springs in window 26 to intermediate plate 24 and from the intermediate plate 24 through auxiliary springs 32 to the hub. Because the springs 32 are much softer than springs 27, there is a direct drive without spring compression through the springs 27 and the initial angular movement occurs between intermediate plate and hub under the control of auxiliary springs 32. This is the situation for movement up to 3° in either direction as allowed by the co-operating teeth 13 and 25 of the hub and intermediate plate respectively. After this movement of 3° in either direction, teeth 13 and 25 allow no further relative rotation between hub and intermediate member so the torque required to produce further deflection increases more rapidly because this deflection is associated with compression of main damping springs such as 27 in windows 26. As previously described, some of the main damping springs may come into operation at different stages of rotation due to variations in their lengths and in the widths of the windows in the intermediate plate 24. This results in stepped increases in the stiffness of the main torsion damping springs.

One or more of the bearing members 44 or 46 may be made of a friction material so as to provide a significant degree of friction between the relatively rotatable parts of the driven plate and thus assist in the damping out of vibrations. Generally, some friction damping is desirable in conjunction with the movement controlled by the main torsion damping springs whereas very low friction is normally desirable in association with the movement controlled by the auxiliary friction damping springs.

The present invention is concerned particularly with the arrangement of the flange 12, auxiliary damping springs 32 and plate member 35. The auxiliary damping springs 32 are located in part-cylindrical pockets 36 formed in the side face of flange 12 of hub 11. The pockets 36 and the outwardly directed teeth 13 which extend only along a part of the axial extent of the flange 12 are conveniently formed if the hub is made by a sintering process. The configuration of the teeth 13 permits the flange 12 to incorporate sufficient material for the provision of the pockets 36 without unduly increasing the bulk of the flange. This in turn permits the number of components in the driven plate to be reduced and simplifies the construction of the driven plate.

The arrangement of bearing members 44,46 and springs 43,45 permits positive relative location of the friction facing carrier, hub and intermediate plate without the need for a circlip to hold the plate member 35 or one of the side plates 15,16 in position.

Moreover, the annular space between the hub 11 and the side plate 16 avoids the need to deform the side plate 16 so as to fit over the plate member 35. This enables the driven plate to be more compact than would otherwise be possible.

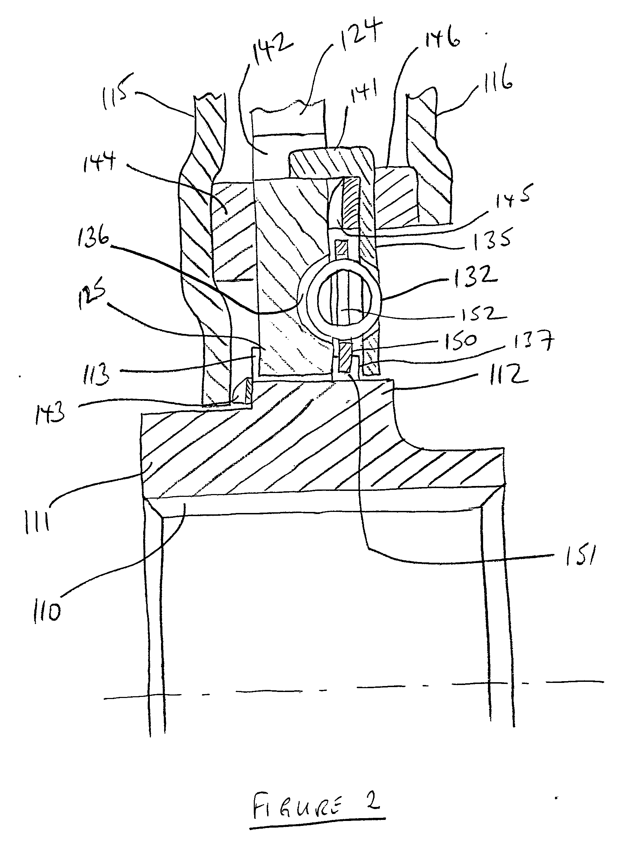

Figure 2 shows a simplified form of auxiliary torsion damping to that shown in Figure 1. Figure 2 shows a driven plate which incorporates a hub 111 splined at 110 for mounting on and driving a gearbox input shaft (not shown). Hub 111 incorporates an external radial flange 112 which is provided with outwardly directed teeth 113 around its periphery. The teeth 113 extend along only a part of the axial extent of the flange 112.

A friction facing carrier (not shown in full) includes two axially spaced annular side plates 115 and 116 which are connected together by stop pins (not shown). The construction of the friction facing carrier is essentially the same as that described above with reference to Figure 1. Side plate 115 extends inward towards the hub 111 and has a central aperture corresponding to the outer diameter of the hub 111 so that it acts as a guide for constraining the friction facing carrier with respect to the hub. Side plate 116 on the other hand is spaced radially from the hub 111.

A driving connection between the friction facing carrier and the hub 111 includes an intermediate drive means constituted by an intermediate plate 124. The intermediate plate which is only partially shown is generally annular and around its inner periphery incorporates inwardly directed teeth 125 which mesh, by way of a circumferential clearance, with the outwardly directed teeth 113 of the hub 111. The clearance provides a lost-motion connection between the hub and the intermediate plate which in this embodiment allows relative movement of 6°.

Although it is now shown in Figure 2, the intermediate plate 124 is provided with circumferentially directed windows which receive main torsion damping springs, which springs are also received in windows in the side plates 115 and 116.

The driven plate also incorporates an auxiliary torsion damping spring connection between the intermediate plate 124 and the hub 111 to control the relative angular rotation between the hub and the intermediate plate which is permitted by the teeth 113 and 125. According to the embodiment of Figure 2 this connection is effected by three circumferentially directed auxiliary springs 132 which are arranged in a window in plate member 135 and extend into part-cylindrical pockets 136 formed in the side face of intermediate plate 124 and which are therefore only open to one side. Plate member 135 is freely rotatable on the hub 111 but has bent over lugs 141 which engage in notches 142 at the inner edges of three of the windows formed in the intermediate plate 124 to provide a positive driving connection between plate member 135 and the intermediate plate.

An annular plate 150 extends around the hub 111 between the intermediate plate 124 and the plate member 135 and is prevented from rotating relative to the hub 111, for example by means of a splined connection 151. Windows 152 are provided in the plate 150 to receive the auxiliary springs 132. Thus the auxiliary springs 132 provide a driving connection between the intermediate plate 124 and the hub 111 through the intermediary of the annular plate member 150 and the splined connection 152, with the plate member 135 serving to maintain the auxiliary springs 132 in position.

The relative location of the friction facing carrier, hub and intermediate plate includes several axially directed annular bearing members and associated axially directed annular springs. In particular, the side plate 115 is spaced from the flange 112 by a spring 143 and bears against the intermediate plate by way of a bearing member 144. The plate member 135 is spaced from the intermediate plate 124 by a spring 145 and bears against the side plate 116 by way of a bearing member 146. The plate member 135 also bears against a shoulder 137 provided on the hub 111 by the splined connection 151. This arrangement of springs and bearing members in combination with the shoulder 137 provides axial location of the plate member 137, side plate 116, intermediate plate 124 and side plate 115 without the need for a circlip.

Operation of the driven plate shown in Figure 2 is essentially the same as that shown in Figure 1.

In contrast to the embodiment shown in Figure 1, the part-cylindrical pockets 136 of the driven plate shown in Figure 2 are formed in the intermediate plate 124. The pockets 136 are conveniently formed if the intermediate plate 124 is made by a sintering process. In addition to the advantages of the embodiment of Figure 1, the embodiment of Figure 2 allows a further simplification in the construction of the driven plate with a corresponding decrease in the number of components. It also permits positive location of the hub boss and the auxiliary springs 132.

**Claims**

1. A friction clutch driven plate comprising a hub (11), a friction facing carrier (14) mounted on the hub coaxially therewith and capable of limited angular movement about the hub, intermediate drive means (24) mounted coaxially on the hub for limited angular rotation relative to both the hub (11) and the friction facing carrier (14), main torsion damping springs (27) acting to resist rotation of the friction facing carrier relative to the intermediate drive means, and auxiliary torsion damping springs (32) softer than the main torsion damping springs and acting circumferentially to resist rotation of the intermediate drive means (24) relative to the hub (11), characterised in that the auxiliary torsion damping springs (32) are supported in pockets (36,136) formed in one radial face of the hub (11) or the intermediate drive means (124).

2. A friction clutch driven plate as claimed in claim 1, characterised in that a plate member (35) is connected to the intermediate drive means for rotation therewith and is connected to the auxiliary springs (32).

3. A friction clutch driven plate as claimed in claim 2, characterized in that the plate member (35) bears axially against a shoulder (47) formed on the hub (11).

4. A friction clutch driven plate as claimed in claim 2 or 3, characterized in that an axially directed annular spring (45) acts between the plate member (35) and the intermediate drive means (24).

5. A friction clutch driven plate as claimed in claim 2,3 or 4, characterised in that an annular plate (150) extends around the hub (111) between the intermediate drive means (124) and the plate member (135) and receives the auxiliary springs (132) in windows (152), the annular plate (150) being non-rotatable relative to the hub (111).

6. A friction clutch driven plate as claimed in any one of claims 1 to 5, characterized in that the auxiliary springs (132) are supported in pockets (136) formed in one radial face of the intermediate drive means (124).

7. A friction clutch driven plate as claimed in claim 6, characterized in that the hub (111) is provided with outwardly directed teeth (113) which engage through a circumferential clearance with corresponding inwardly directed teeth (125) of the intermediate drive means.

8. A friction clutch driven plate as claimed in any one of claims 1 to 4, characterized in that the hub (11) incorporates a flange (12), the pockets (36) supporting the auxiliary springs (32) being provided in a radial face of the flange (12).

9. A friction clutch driven plate as claimed in claim 8, characterised in that the flange (12) is provided with outwardly directed teeth (13) which engage through a circumferential clearance with corresponding inwardly directed teeth (25) of the intermediate drive means.

10. A friction clutch driven plate as claimed in claim 9, characterized in that the outwardly directed teeth (13) of the flange extend only a part of the axial extent of the flange.

FIGURE 1

FIGURE 2